# EUROPÄISCHE PATENTANMELDUNG

(11) **EP 4 520 156 A1**
(43) Veröffentlichungstag der Anmeldung: **12.03.2025**
(21) Anmeldenummer: 24197608.3
(22) Anmeldetag: 30.08.2024
(51) Int. Cl.: A01C 15/04, A01C 17/00

(54) **STREUWERK FÜR EIN LANDWIRTSCHAFTLICHES STREUFAHRZEUG SOWIE LANDWIRTSCHAFTLICHES STREUFAHRZEUG**

(30) Priorität: 07.09.2023 DE 102023003633
(71) Anmelder: ANNABURGER Nutzfahrzeug GmbH, 06925 Annaburg (DE)
(72) Erfinder: Suhr, André, 06925 Annaburg (DE)
(74) Vertreter: Einsiedler, Johannes

(57) **Zusammenfassung**

Die Offenlegungsschrift betrifft ein Streuwerk (1) für ein landwirtschaftliches Streufahrzeug, mit mindestens einem Streuteller (2) und einer Mehrzahl von Wurfflügeln (3), wobei sich die Wurfflügel (3) über eine erste, mit Streugut beaufschlagbare, Fläche des Streutellers (2) erstrecken, wobei sich mindestens einer der Wurfflügel (3) auf eine zweite Fläche des Streutellers (2), die der ersten Fläche im Wesentlichen Gegenüberliegt, erstreckt. Die Offenlegungsschrift betrifft auch ein landwirtschaftliches Streufahrzeug (7) mit mindestens einem derartigen Streuwerk (1).

## Beschreibung

Die vorliegende Erfindung betrifft ein Streuwerk für ein landwirtschaftliches Streufahrzeug sowie ein landwirtschaftliches Streufahrzeug mit mindestens einem Streuwerk.

Ein Streuwerk für ein landwirtschaftliches Streufahrzeug sowie ein landwirtschaftliches Streufahrzeug mit zwei solchen Streuwerken ist z.B. aus der DE 198 17 742 A1 bekannt. Es umfasst einen Streuteller und Wurfflügel. In Arbeitsrichtung hinter den Wurfflügeln sind dabei Durchbrechungen des Streutellers vorgesehen, um Luftverwirbelungen hinter den Wurfflügeln zu verringern. Die Wurfflügel können für eine Änderung der Wurfweite und dadurch der Arbeitsbreite zweiteilig ausgebildet und somit längenveränderlich sein, oder Winkelverstellbar ausgebildet sein.

Nachteilig bei dem bekannten Streuwerk ist es, dass eine Längenveränderung der Wurfflügel aufwändig und kompliziert ist, insbesondere um mehrere Wurfflügel gleichermaßen zu verändern. Dadurch ist eine Anpassung auf veränderliche Gegebenheiten, seitens des auszubringenden Streuguts und auch seitens der zu bestellenden landwirtschaftlichen Fläche, zwar möglich, jedoch im Betrieb umständlich und komplex.

Der Erfindung liegt die Aufgabe zugrunde, die erreichbare Wurfweite und damit auch die erreichbare Streubreite weiter zu verbessern.

Diese Aufgabe wird erfindungsgemäß durch ein Streuwerk gemäß Anspruch 1 gelöst, sowie durch ein landwirtschaftliches Streufahrzeug gemäß Anspruch 10. Vorteilhafte Ausführungsformen sind Gegenstand der abhängigen Ansprüche.

Das erfindungsgemäße Streuwerk für ein landwirtschaftliches Streufahrzeug weist mindestens einen Streuteller und eine Mehrzahl von Wurfflügeln auf, wobei sich die Wurfflügel über eine erste, mit Streugut beaufschlagbare, Fläche des Streutellers erstrecken. Mit anderen Worten ragen die Wurfflügel aus der ersten Seite bzw. Fläche des Streutellers heraus in Richtung des Streuguts, z.B. nach oben. Erfindungsgemäß erstreckt sich zudem mindestens einer der Wurfflügel auf eine zweite Fläche des Streutellers, die der ersten Fläche im Wesentlichen gegenüberliegt, z.B. nach unten. Dadurch wird bei einer Drehung des Streutellers an der zweiten Fläche, z.B. darunter, eine Luftströmung auf einen äußeren Tellerrand hin erzeugt. Diese Luftströmung kann eine erreichbare Wurfweite bei sehr leichtem Streugut, z.B. leichtem Kompost oder Kalk, erheblich vergrößern. Bei sehr schwerem Streugut, z.B. schwerem Stapelmist, kann die Vergrößerung durch das höhere Relativgewicht des Streuguts jedoch sehr gering ausfallen oder unterbleiben. Dadurch kann die erreichbare Wurfweite und damit auch die erreichbare Streubreite sehr einfach Streugutabhängig verbessert werden.

Da sich mindestens einer der Wurfflügel auf die zweite Fläche des Streutellers erstreckt, kann sich nur eine Wurfflügel dahin erstrecken, oder mehrere, oder alle. Wenn sich alle gleich dahin erstrecken, kann ein besonders konstanter Luftstrom erreicht werden und der positive Einfluss auf die erreichbare Streubreite maximal genutzt werden. Wenn sich nur einer oder mehrere dahin erstrecken und/oder um nur teils gleiche Beträge, kann je nach Ausgestaltung ein spezifischer Luftstrom erreicht werden, der bei speziellem Streugut ein spezifisch vorteilhaftes Streubild ergeben kann.

Unter dem Begriff Wurfflügel soll hier insbesondere nicht nur eine ebene Platte verstanden werden, sondern jede zum Werfen von Streugut besonders geeignete Werfergeometrie, die insbesondere oberhalb der ersten Fläche allen gebräuchlichen oder vorteilhaften Wurfflügelformen entsprechen kann.

In einer vorteilhaften Weiterbildung der erfindungsgemäßen Lösung erstreckt sich mindestens einer der Wurfflügel durch eine Ausnehmung im Streuteller hindurch, wobei sich die Ausnehmung den zweiten Streuteller erstreckt und der Wurfflügel sich durch die Ausnehmung hindurch erstreckt. Somit wird eine gleichermaßen präzise und einfach herzustellende Ausrichtung der Wurfflügel ermöglicht. Dadurch kann die streugutabhängige Verbesserung der Wurfweite und damit auch der erreichbaren Streubreite sehr einfach erzielt werden. Dabei kann insbesondere ein Betrag der Erstreckung oberhalb der ersten Fläche einstellbar sein. Hierdurch kann die Wurfweite und damit auch die Streubreite noch genauer Streugutabhängig verbessert werden, z.B. da für schweres Streugut bei größerem Betrag eine größere verfügbare Wurfflügelfläche genutzt werden kann und für leichteres Streugut eine kleinere verfügbare Wurfflügelfläche vorteilhaft sein kann.

In einer weiteren vorteilhaften Weiterbildung der erfindungsgemäßen Lösung ist unterhalb der zweiten Fläche des Streutellers ein Luftleitteller angeordnet. Besonders Vorteilhaft kann der Luftleitteller komplementär zur Formgebung des Streutellers ausgebildet sein. Dadurch kann ein erreichbarer Luftstrom besonders Zielgerichtet durch das definiert verfügbare Volumen zwischen Streuteller und Luftleitteller erreicht werden. Durch die komplementäre Formgebung ist der erreichbare Luftstrom besonders leicht zu dimensionieren.

In einer weiteren vorteilhaften Weiterbildung der erfindungsgemäßen Lösung ist der Luftleitteller drehfest mit dem Streuteller gekoppelt, jedoch relativ zum Streuteller verstellbar, sodass ein Abstand zwischen dem Luftleitteller und den Streuteller einstellbar ist. Unter dem Begriff "drehfest" soll hier insbesondere verstanden werden, dass sich bei einem Antreiben des Streutellers in Drehrichtung der Luftleitteller durch die Kopplung mit einer identischen Drehbewegung mit dreht, und umgekehrt bei einem Antreiben des Luftleittellers in Drehrichtung durch die Kopplung der Streuteller in eine identische Drehbewegung versetzt wird. Dadurch kann der (noch von einer möglichen Drehzahl abhängig) erreichbare Luftstrom besonders komfortabel und Zielgerichtet beeinflusst werden.

In einer weiteren vorteilhaften Weiterbildung der erfindungsgemäßen Lösung ist mindestens einer der Wurfflügel fest mit dem Luftleitteller verbunden und erstreckt sich durch die Ausnehmung im Streuteller. Dadurch kann bei einer Verstellung des Abstands zwischen dem Luftleitteller und den Streuteller nicht nur erreicht werden, dass der Luftstrom komfortabel beeinflusst werden kann. Es kann dadurch vielmehr gleichzeitig auch der Betrag der Erstreckung des Wurfflügels oberhalb der ersten Fläche eingestellt werden. Bei größerem Abstand zwischen dem Luftleitteller und dem Streuteller reduziert sich auch der der Betrag der Erstreckung des Wurfflügels oberhalb der ersten Fläche. Für besonders leichtes und gleichzeitig krümeliges Streugut kann durch die geringe Erstreckung, d.h. die vergleichsweise kleinere verfügbare Wurfflügelfläche, eine zusätzliche Zerkleinerung des krümeligen Streuguts erreicht und es gleichermaßen durch den größtmöglichen Luftstrom besonders weit geworfen werden. Bei schwerem Streugut wie z.B. schwerem Stapelmist kann durch den kleinsten Abstand zwischen Luftleitteller und dem Streuteller und dadurch der größten Erstreckung des Wurfflügels oberhalb der ersten Fläche die größte verfügbare Wurfflügelfläche genutzt werden. Dadurch kann bei dem schweren Streugut, bei dem der Einfluss des Luftstroms im Vergleich vernachlässigbar ist, die größte Wurfweite durch die größte verfügbare Wurfflügelfläche erreicht werden. Somit kann die Wurfweite und damit auch die Streubreite gleichermaßen einfach und komfortabel noch genauer Streugutabhängig verbessert werden.

In einer weiteren vorteilhaften Weiterbildung der erfindungsgemäßen Lösung ist der Streuteller in einem Gehäuse angeordnet, das zumindest abschnittsweise einen Luftstrom gezielt leitend ausgebildet ist. Dadurch kann der Luftstrom besonders einfach und zielgerichtet eingesetzt werden und so ein gewünschtes Streubild besonders präzise festgelegt werden.

In einer weiteren vorteilhaften Weiterbildung der erfindungsgemäßen Lösung besteht die erste, mit Streugut beaufschlagbare, Fläche des Streutellers aus Segmenten, die zueinander in einem Winkel von weniger als 180° angeordnet sind. Dies soll insbesondere für einander um die Drehachse gesehen gegenüberliegenden Segmente auf deren erster Fläche gelten, jedoch alternativ oder zusätzlich auch für zwei nebeneinander angeordnete Segmente. Besonders Bevorzugt liegt der Winkel zwischen weniger als 180° und mehr als 90°. Dadurch kann vereinfacht ausgedrückt ein kegelig gestalteter Streuteller sehr einfach erreicht werden. Eine derartige Gestaltung beeinflusst die erreichbare Wurfweite bereits per se, jedoch kann dadurch zusätzlich eine besonders vorteilhafte Ausrichtung des erfindungsgemäßen Luftstroms zum Streugut erreicht werden, die nochmals eine erhebliche Verbesserung der Wurfweite bewirkt.

In einer weiteren vorteilhaften Weiterbildung der erfindungsgemäßen Lösung umfasst ein Antriebsstrang für eine Drehbewegung des Streutellers und der Wurfflügel zum Steuern einer Drehzahl ein hydrostatisches, mechanisches oder leistungsverzweigtes Getriebe. Ein hydrostatisches Getriebe ermöglicht dabei eine besonders optimierte Gewichtsverteilung, ein mechanisches Getriebe eine besonders robuste Ausgestaltung und ein leistungsverzweigtes Getriebe eine besonders vorteilhaft nutzbares Drehzahlband.

In einer weiteren vorteilhaften Weiterbildung der erfindungsgemäßen Lösung ist der Abstand zwischen dem Luftleitteller und den Streuteller und/oder eine Drehzahl der Drehbewegung des Luftleittellers und der Wurfflüge durch eine Steuereinrichtung einstellbar, insbesondere mittels einer Schnittstelle zu einem Fahrgassensystem oder einer anderen Steuerungslogik. Dadurch ist die erreichbare Wurfweite und damit auch die erreichbare Streubreite nicht nur besonders einfach und präzise anzupassen, sondern die Anpassung auf veränderliche Gegebenheiten seitens des auszubringenden Streuguts besonders effektiv möglich. Insbesondere können mittels der genannten Schnittstelle auch Gegebenheiten der zu bestellenden landwirtschaftlichen Fläche besonders einfach einbezogen werden und die Anpassung des Luftstroms und damit wiederum der erreichbare Streubreite besonders präzise erreicht werden.

Die Aufgabe wird auch gelöst durch ein landwirtschaftliches Streufahrzeug mit mindestens einem Streuwerk nach einem der vorhergehenden Absätze. Dabei soll unter einem landwirtschaftlichen Streufahrzeug nicht nur ein selbstfahrendes Streufahrzeug verstanden werden, sondern insbesondere auch ein entsprechender Anhänger oder ein entsprechendes Anbaugerät.

Ein Ausführungsbeispiel der Erfindung ist in der Zeichnung rein schematisch dargestellt und wird nachfolgend näher beschrieben. Es zeigt:

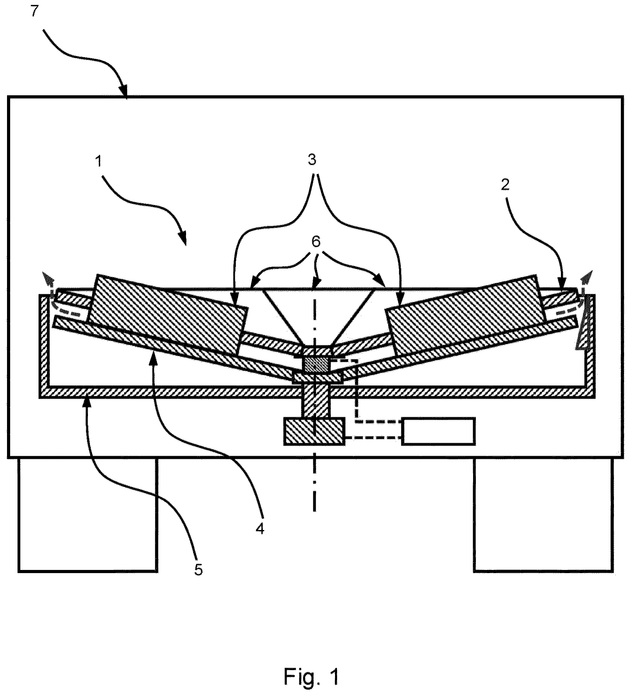

- Fig. 1: eine Heckansicht auf ein schematisch dargestelltes erfindungsgemäßes Streuwerk an einem landwirtschaftlichen Streufahrzeug im Teilschnitt.

Die einzige Figur 1 zeigt ein erfindungsgemäßes Streuwerk 2 an einem entsprechenden landwirtschaftlichen Streufahrzeug 7 in stark schematisierter Heckansicht.

Das Streuwerk 1 umfasst einen hier kegelig gestalteten Streuteller 2 und eine Mehrzahl von Wurfflügeln 3. Die Wurfflügel 3 erstrecken sich über eine erste, mit Streugut beaufschlagbare, Fläche des Streutellers 2, wie in Figur 1 erkennbar ist nach oben. Alle Wurfflügel 3 erstrecken sich auch auf eine zweite Fläche des Streutellers 2, die der ersten Fläche im Wesentlichen gegenüberliegt. Im Beispiel nach Figur 1 ist dies erkennbar nach unten. Dadurch wird bei einer Drehung des Streutellers 2 an der zweiten Fläche, an einer Unterseite des Streutellers 2 eine Luftströmung auf einen äußeren Tellerrand hin erzeugt. Diese Luftströmung wirkt auf ein mit dem Streuwerk 1 verstreutes Streugut (nicht dargestellt) ein und kann eine erreichbare Wurfweite erhöhen, insbesondere bei leichtem Streugut.

Wie in Figur 1 erkennbar, erstrecken sich die Wurfflügel 3 durch je eine Ausnehmung im Streuteller 2 von der ersten Fläche zu der zweiten Fläche hindurch (in Figur 1 nicht separat bezeichnet. Ein Betrag der Erstreckung oberhalb der ersten Fläche des Streutellers 2 ist im vorliegenden Beispiel einstellbar. Hierzu ist unterhalb der zweiten Fläche des Streutellers 2 ein Luftleitteller 4 angeordnet. Der Luftleitteller 4 ist komplementär zur Formgebung des Streutellers 2 ausgebildet. Der Luftleitteller 4 ist drehfest mit dem Streuteller 2 gekoppelt, jedoch relativ zum Streuteller 2 verstellbar, sodass ein Abstand zwischen dem Luftleitteller 4 und den Streuteller 2 einstellbar ist. Die Wurfflügel 3 sind fest mit dem Luftleitteller 4 verbunden und erstrecken sich durch die Ausnehmung im Streuteller 2. Die feste Verbindung der Wurfflügel 3 mit dem Luftleitteller 4 wird im vorliegenden Beispiel durch nicht dargestellte Verschraubungen erreicht. Dadurch kann bei einer Verstellung des Abstands zwischen dem Luftleitteller 4 und den Streuteller 2 gleichzeitig erreicht werden, dass der Luftstrom komfortabel beeinflusst werden kann, und gleichzeitig der Betrag der Erstreckung des Wurfflügels 3 oberhalb der ersten Fläche eingestellt wird. Bei größerem Abstand zwischen dem Luftleitteller 4 und dem Streuteller 2 reduziert sich auch der der Betrag der Erstreckung des Wurfflügels 3 oberhalb der ersten Fläche. Für besonders leichtes und gleichzeitig krümeliges Streugut kann durch die geringe Erstreckung, d.h. die vergleichsweise kleinere verfügbare Wurfflügelfläche, eine zusätzliche Zerkleinerung des krümeligen Streuguts erreicht und es gleichermaßen durch den größtmöglichen Luftstrom besonders weit geworfen werden. Somit kann die Wurfweite und damit auch die Streubreite gleichermaßen einfach und komfortabel noch genauer Streugutabhängig verbessert werden.

Der Streuteller 2 ist, wie auch der Luftleitteller 4, in einem Gehäuse 5 angeordnet, das zumindest abschnittsweise einen Luftstrom gezielt leitend ausgebildet ist, wie es im oberen rechten Bereich des Gehäuses 5 schematisch angedeutet ist. Dadurch kann der Luftstrom besonders einfach und zielgerichtet eingesetzt werden und so ein gewünschtes Streubild besonders präzise festgelegt werden.

Das landwirtschaftliche Streufahrzeug 7 umfasst gemäß Figur 1 genau ein Streuwerk 1 mit einem Streuteller 2. Jedoch kann ein landwirtschaftliches Streufahrzeug 7 auch ein Streuwerk 1 mit zwei oder mehr Streutellern 2 umfassen, z.B. zwei nebeneinander angeordnet. Dabei soll auch eine mögliche Konstellation mit zwei, vier oder sechs Streutellern 2 (und auch zwei, vier oder sechs Luftleittellern 4 etc.) in einem gemeinsamen Gehäuse 5 als ein Streuwerk 1 mit zwei, vier oder sechs Streutellern 2 angesehen werden.

Die erste, mit Streugut beaufschlagbare Fläche des Streutellers 2 besteht aus Segmenten 6, die zueinander in einem Winkel von weniger als 180° und mehr als 90° angeordnet sind. Dabei liegen sowohl einander um die Drehachse gesehen gegenüberliegenden Segmente 6 mit deren erster Fläche in diesem Winkelbereich zueinander, als auch je zwei nebeneinander angeordnete Segmente 6. Dadurch ergibt sich im vorliegenden Beispiel die kegelige Form des Streutellers 2. Die Drehachse ist in Fig. 1 als Strichpunktlinie eingezeichnet, liegt mittig im Streuwerk 1 und verläuft senkrecht.

Wie in Figur 1 ersichtlich, umfasst ein Antriebsstrang für eine Drehbewegung des Streutellers 2 und der Wurfflügel 3 zum Steuern einer Drehzahl ein Getriebe, im dargestellten Beispiel ein hydrostatisches Getriebe. Hierdurch kann die Drehzahl besonders komfortabel spezifisch eingestellt werden. Es sind jedoch andere variable Antriebssysteme einsetzbar, z.B. ein mechanisches Getriebe mit variabler Übersetzung oder ein Mechanisch-Hydraulisch-Leistungsverzweigtes Getriebe. Der Abstand zwischen dem Luftleitteller 4 und dem Streuteller 2 und die Drehzahl der Drehbewegung des Streutellers 2 und der Wurfflügel 3 ist durch eine Steuereinrichtung einstellbar, die in Figur 1 mittels gestrichelt dargestellter Datenleitungen mit dem Getriebe und mit einer Verstelleinrichtung für den Abstand, verbunden ist. Die Verstelleinrichtung für den Abstand kann direkt oder mittelbar durch elektromechanische oder elektrohydraulische Systeme erfolgen (hier nicht spezifisch dargestellt).

Dadurch wird sowohl eine Anpassung auf veränderliche Gegebenheiten seitens des auszubringenden Streuguts als auch seitens der zu bestellenden landwirtschaftlichen Fläche auf einfache Art möglich, und eine erreichbare Wurfweite und damit auch die erreichbare Streubreite auf komfortable Weise erheblich verbessert.

### Bezugszeichenliste

- 1: Streuwerk
- 2: Streuteller
- 3: Wurfflügel
- 4: Luftleitteller
- 5: Gehäuse
- 6: Segment
- 7: Landwirtschaftliches Streufahrzeug

## Patentansprüche

1. Streuwerk (1) für ein landwirtschaftliches Streufahrzeug, mit mindestens einem Streuteller (2) und einer Mehrzahl von Wurfflügeln (3), wobei sich die Wurfflügel (3) über eine erste, mit Streugut beaufschlagbare, Fläche des Streutellers (2) erstrecken **dadurch gekennzeichnet, dass** sich mindestens einer der Wurfflügel (3) auf eine zweite Fläche des Streutellers (2), die der ersten Fläche im Wesentlichen gegenüberliegt, erstreckt.

2. Streuwerk (1) nach Anspruch 1, **dadurch gekennzeichnet, dass** sich mindestens einer der Wurfflügel (3) durch eine Ausnehmung im Streuteller (2), von der ersten Fläche zu der zweiten Fläche, hindurch erstreckt und insbesondere ein Betrag seiner Erstreckung oberhalb der ersten Fläche einstellbar ist.

3. Streuwerk (1) nach Anspruch 1 oder 2, **dadurch gekennzeichnet, dass** unterhalb der zweiten Fläche des Streutellers (2) ein Luftleitteller (4) angeordnet ist, der insbesondere komplementär zur Formgebung des Streutellers (2) ausgebildet ist.

4. Streuwerk (1) nach Anspruch 3, **dadurch gekennzeichnet, dass** der Luftleitteller (4) drehfest mit dem Streuteller (2) gekoppelt, jedoch relativ zum Streuteller (2) verstellbar ist, sodass ein Abstand zwischen dem Luftleitteller (4) und den Streuteller (2) einstellbar ist.

5. Streuwerk (1) nach Anspruch 3 oder 4, **dadurch gekennzeichnet, dass** mindestens einer der Wurfflügel (3) fest mit dem Luftleitteller (4) verbunden ist und sich durch die Ausnehmung im Streuteller (2) über die erste, mit Streugut beaufschlagbaren, Fläche des Streutellers (2) erstreckt.

6. Streuwerk (1) nach einem der Ansprüche 1 bis 5, **dadurch gekennzeichnet, dass** der Streuteller (2) in einem Gehäuse (5) angeordnet ist, das zumindest abschnittsweise einen Luftstrom gezielt leitend ausgebildet ist.

7. Streuwerk (1) nach einem der Ansprüche 1 bis 6, **dadurch gekennzeichnet, dass** die erste, mit Streugut beaufschlagbare, Fläche des Streutellers (2) aus Segmenten (6) besteht, die zueinander in einem Winkel von weniger als 180° angeordnet sind.

8. Streuwerk (1) nach einem der Ansprüche 1 bis 6, **dadurch gekennzeichnet, dass** ein Antriebsstrang für eine Drehbewegung des Luftleittellers (4) und der Wurfflügel (3) zum Steuern einer Drehzahl ein hydrostatisches, mechanisches oder leistungsverzweigtes Getriebe umfasst.

9. Streuwerk (1) nach den Ansprüchen 4 und 8, **dadurch gekennzeichnet, dass** der Abstand zwischen dem Luftleitteller (4) und den Streuteller (2) und/oder eine Drehzahl der Drehbewegung des Streutellers (2) und der Wurfflügel (3) durch eine Steuereinrichtung einstellbar ist, insbesondere mittels einer Schnittstelle zu einem Fahrgassensystem oder einer anderen Steuerungslogik.

10. Landwirtschaftliches Streufahrzeug (7), mit mindestens einem Streuwerk (1) nach einem der vorhergehenden Ansprüche.
